# EUROPEAN PATENT SPECIFICATION

(11) **EP 3 404 336 B1**
(45) Date of publication and mention of the grant of the patent: **25.03.2020**
(21) Application number: 18000463.2
(22) Date of filing: 17.05.2018
(51) Int. Cl.: F24F 3/02, F24F 3/052, F24F 3/14, F24F 3/153, F24F 3/16, B01D 53/26, F24F 5/00

(54) **METHOD AND PLANT FOR CONTROLLING THE TEMPERATURE OF COMPRESSED AIR EXITING FROM A COMPRESSED AIR PRODUCTION UNIT**
VERFAHREN UND ANLAGE ZUR STEUERUNG DER DRUCKLUFTTEMPERATUR, DIE AUS EINER DRUCKLUFTPRODUKTIONSEINHEIT KOMMT
PROCÉDÉ ET INSTALLATION DE RÉGULATION DE LA TEMPÉRATURE D'AIR COMPRIMÉ SORTANT D'UNE UNITÉ DE PRODUCTION D'AIR COMPRIMÉ

(30) Priority: 19.05.2017 IT 201700054521
(43) Date of publication of application: 21.11.2018
(73) Proprietor: Badella, Enrico, 14030 Azzano d'Asti (IT); Randellini, Fabrizio, 00139 Roma (IT)
(72) Inventor: Badella, Enrico, 14030 Azzano d'Asti (IT); Randellini, Fabrizio, 00139 Roma (IT)
(74) Representative: Aprà, Mario

(56) References cited:
- CN-Y- 201 353 473
- JP-A- 2010 101 184
- US-A1- 2016 146 516
- US-B1- 8 574 342

## Description

The present invention concerns a method for controlling the temperature of compressed air exiting from a compressed air production unit.

The present invention also concerns a plant for controlling the temperature of compressed air exiting from a compressed air production unit, for implementation of the aforesaid method.

The compressed air generated by the production units has an output temperature that is a function of the ambient air temperature.

In particular, the temperature of the air determined during compression is very high, both in rotary compressors and, to an even greater extent, in reciprocating compressors.

This excessive temperature of the compressed air is reduced using heat exchangers that make use of ambient air to take and maintain the temperature of the compressed air in a range of temperatures greater than the temperature of the ambient air by around 10 °C - 15 °C. A method and a plant for controlling the temperature of compressed air exiting from a compressed air production unit are known from patent document US-B-8574342.

However, in some applications there is the need to obtain a temperature of the compressed air exiting from the production unit that is controlled separately from the external conditions, in particular those of the environment outside the production unit.

The present invention, starting from the notion of the aforesaid problem, intends to provide a method for controlling the temperature of compressed air exiting from a compressed air production unit, which allows the compressed air exiting from said production unit to be kept within a range of predetermined temperatures, continuously programmable for the established flow rate of exiting compressed air.

In view of this object, the present invention provides for a method for controlling the temperature of compressed air exiting from a compressed air production unit, the essential characteristic of which forms the subject matter of claim 1.

In particular, the present invention provides for a method for controlling the temperature of compressed air exiting from a compressed air production unit, wherein:
- compressed air, produced by a compressor, is conveyed, through first filter means, into an air-coolant heat exchanger, where the compressed air is in contact with a cooler gas that causes precipitation of the condensate and reduction of the temperature of the compressed air, to a predetermined temperature substantially equivalent to the dew point, and
- the air treated in this way is conveyed through coalescent filter means, adapted to retain the oil particles, and then through a heating chamber, provided with means for heating the air, which raise the temperature of the compressed air passing through said chamber to a predetermined value continuously controlled by means of electronic temperature sensor means, which control said heating means continuously for the flow rate of compressed air exiting from said compressed air production unit, the heated compressed air exiting through an air outlet.

By means of the method according to the invention it is possible to maintain the temperature of the compressed air exiting from a compressed air production unit at a temperature continuously programmable between 10 °C and 65 °C for the established flow rate.

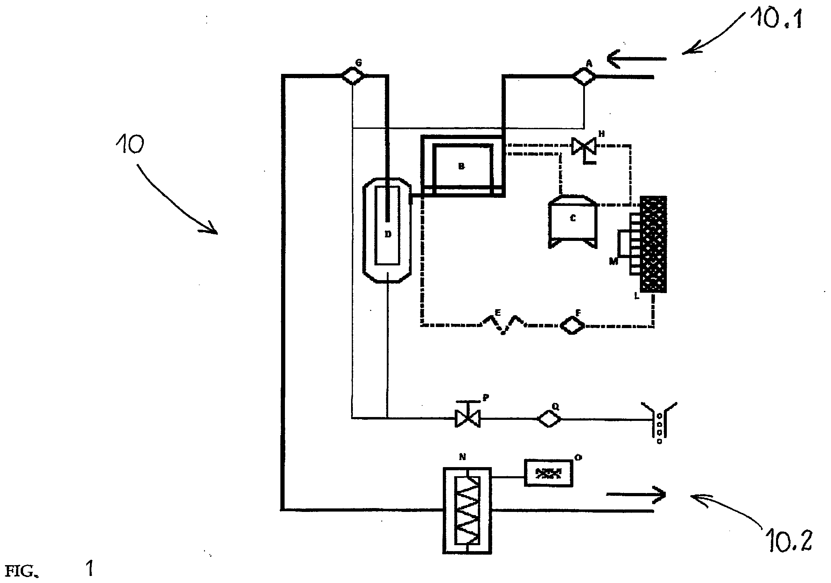

Other characteristics and advantages of the invention will be apparent from the following detailed description of an example of execution of a plant for controlling the temperature of compressed air exiting from a compressed air production unit, for implementation of the method according to the invention, with reference to Fig. 1 of the accompanying drawing, which shows said plant in a simplified schematic form.

In said Fig. 1, the numeral 10 indicates as a whole said plant for controlling the temperature of compressed air exiting from a compressed air production unit (not illustrated), for implementation of the method according to the invention.

Said plant 10 comprises an inlet 10.1 for compressed air, produced by compressor means (known *per se* and not illustrated) and connected, through first filter means A, with an air-coolant heat exchanger B, where the compressed air is in contact with a refrigerant gas, which causes precipitation of the condensate and reduction of the temperature of the compressed air, to a predetermined temperature equivalent to the dew point (indicatively 3 °C). The letter C indicates compressor means for feeding refrigerant gas to said heat exchanger B, while the letter H indicates hot gas bypass valve means arranged in the fluid circuit between said heat exchanger B and said compressor means C.

Moreover, between said heat exchanger B and said compressor means C there is provided a fluid circuit, wherein a capillary tube E connects said heat exchanger B with dehydrator filter means F arranged upstream of condenser means L, including electric fan-condenser means M, from which the compressed air flow is redirected, in continuous cycle, to said compressor means C.

Said heat exchanger B is pneumatically connected, downstream, with respect to condensate separator means D, which are pneumatically connected with respect to coalescent filter means G, which separate the suspended oil particles from the air flow passing through and which are, in turn, pneumatically connected with respect to a heating chamber N, provided with means for heating the air passing through, for example of electric heating element type, which raise the temperature of the compressed air passing through said chamber N to a predetermined value continuously controlled by means of electronic temperature sensor means O, which control the temperature continuously and interact continuously with said heating means of said chamber N also as a function of the flow rate of compressed air exiting from said compressed air production unit.

In said plant 10, the letters P and Q indicate condensate discharge valve means, manual and automatic respectively, which are branched exiting from said condensate separator means D and from said coalescent filter means G.

The number 10.2 indicates a pressurized air outlet, which is maintained, according to the present invention, continuously at a programmed temperature comprised between 10 °C and 65 °C for the flow rate established.

Technical specifications of the plant 10 described above:
Power supply: 230/50/1 (V/HZ/PH)
Control temperature: +5 °C + 50 °C
Dew point under pressure: 3 °C
Flow rate: 600l/1'

Demountable electronic controller O.
1) The filter means mounted inside the dryer - cooler comprise:
   - an inlet filter ATGK 50 X with the following specifications:
      a) FLOW RATE: 833 l/1'
      b) REMOVAL OF SOLIDS: 1 micron
      c) REMOVAL OF OIL: 0.1 mg/ m³
      d) MAXIMUM OPERATING TEMPERATURE: 80 °C
      e) INITIAL LOSS OF LOAD: 80 mbar
      f) MAXIMUM LOSS OF LOAD: 700 mbar, and
   - an outlet filter model ATGK 50 y with the following specifications:
      a) FLOW RATE: 833 l/1'
      b) REMOVAL OF SOLIDS: 0.01 micron
      c) REMOVAL OF OIL: 0.01 mg/ m³
      d) MAXIMUM OPERATING TEMPERATURE: 80 °C
      e) INITIAL LOSS OF LOAD: 100 mbar
      f) MAXIMUM LOSS OF LOAD: 700 mbar

The technical specifications of the dryer are as follows:
a) FLOW RATE: 800 l/1'
b) VOLTAGE: 230/50/1 (V/HZ/PH)
c) REFRIGERANT: R134a
d) LOSS OF LOAD: 150 mbar
e) MAXIMUM OPERATING PRESSURE: 16 bar
f) MAX AMBIENT TEMPERATURE: 40 °C
g) MAX INPUT TEMPERATURE: 50 °C
h) DEW POINT: 3 °C
i) OUTPUT TEMPERATURE: 7 °C

The heater can comprise the following optional components (present in the heater during the test): two filters having the following specifications:
a) FLOW RATE: 833 l/1'
b) REMOVAL OF SOLIDS: 0.01 micron
c) REMOVAL OF OIL: 0.01 mg/m³
d) MAXIMUM OPERATING TEMPERATURE: 80 °C
e) INITIAL LOSS OF LOAD: 100 mbar
f) MAXIMUM LOSS OF LOAD: 700 mbar.

As can be seen from the above, with the present invention it is possible to achieve the object indicated in the introductory part of the description in a simple, effective manner.

In particular, the present invention provides a method for controlling the temperature of compressed air exiting from a compressed air production unit, which allows the compressed air exiting from said production unit to be maintained in a range of predetermined temperatures continuously programmable for the predetermined flow rate of exiting compressed air.

Moreover, the present invention provides a plant for controlling the temperature of compressed air exiting from a compressed air production unit, for the implementation of the aforesaid method, which has a simple structure, is safe to operate, is easy to maintain and has limited technical and financial expenditure.

## Claims

1. Method for controlling the temperature of compressed air exiting from a compressed air production unit, wherein:
- compressed air, produced by a compressor (C), is conveyed, through first filter means (A), into an air-coolant heat exchanger (B), where the compressed air is in contact with a cooler gas that causes precipitation of the condensate and reduction of the temperature of the compressed air, to a predetermined temperature substantially equivalent to the dew point, and
- the air treated in this way is conveyed through coalescent filter means (G), which retain the oil particles, and then through a heating chamber (N), provided with means for heating the air, the method being **characterised in that** the means for heating the air raise the temperature of the compressed air passing through said chamber (N) to a predetermined value continuously controlled by means of electronic temperature sensor means (O), which control said heating means continuously for the flow of compressed air exiting from said compressed air production unit, the heated compressed air exiting through an air outlet.

2. Plant (10) for controlling the temperature of the compressed air exiting from a compressed air production unit, for implementation of the method according to claim 1, **characterized in that** it comprises an inlet (10.1) for compressed air, produced by compressor means and connected, through first filter means (A), with an air-coolant heat exchanger (B), where the compressed air is in contact with a refrigerant gas, which causes precipitation of the condensate and reduction of the temperature of the compressed air, to a predetermined temperature equivalent to the dew point, and **in that** said heat exchanger (B) is pneumatically connected, downstream, with respect to condensate separator means (D), which are pneumatically connected with respect to coalescent filter means (G), which separate the suspended oil particles from the air flow passing through and which are, in turn, pneumatically connected with respect to a heating chamber (N), provided with means for heating the air passing through, the plant being **characterised in that** the means for heating the air are configured to raise the temperature of the compressed air passing through said chamber (N) to a predetermined value continuously controlled by means of electronic temperature sensor means (O), which control the temperature continuously and interact continuously with said heating means of said chamber (N) also as a function of the flow rate of compressed air exiting from said compressed air production unit, the heated compressed air exiting through an air outlet (10.2).

3. Plant according to claim 2, wherein there are provided compressor means (C) for feeding refrigerant gas to said heat exchanger (B), and hot gas bypass valve means (H) arranged in the fluid circuit between said heat exchanger (B) and said compressor means (C).

4. Plant according to claim 2 and/or 3, wherein between said heat exchanger (B) and said compressor means (C) there is provided a fluid circuit, wherein a capillary tube (E) connects said heat exchanger (B) with dehydrator filter means (F) arranged upstream of condenser means (L), including electric fan-condenser means (M), from which a compressed air flow is redirected, in continuous cycle, to said compressor means (C).

5. Plant according to one or more of claims 2 to 4, wherein condensate discharge valve means, manual and automatic (P, Q) respectively, are branched exiting from said condensate separator means (D) and from said coalescent filter means (G).

## Patentansprüche

1. Verfahren zur Temperaturkontrolle der aus einer Drucklufterzeugungszentrale austretenden Druckluft, wobei:
- die von einem Kompressor (C) erzeugte Druckluft durch erste Filtermittel (A) in einen Luft-Kühlmittel-Austauscher (B) befördert wird, wo die Druckluft mit einem Kühlgas in Kontakt kommt, das die Ausfällung des Kondenswassers und die Verminderung der Temperatur der Druckluft selbst bewirkt, bis zu einer vorbestimmten Temperatur, die im Wesentlichen der Tautemperatur entspricht, und
- die so behandelte Luft durch koaleszierende Filtermittel (G), die die Ölpartikel zurückhalten, dann durch eine Heizkammer (N), die mit Luftheizmitteln ausgestattet ist, befördert wird, wobei das Verfahren **dadurch gekennzeichnet ist, dass** die Luftheizmittel die Temperatur der durch besagte Kammer (N) durchströmenden Druckluft auf einen vorher festgelegten Wert erhöhen, der kontinuierlich durch elektronische Mittel mit Temperaturfühler (O) kontrolliert wird, die die besagten Mittel zur kontinuierlichen Erwärmung für die Menge von Druckluft aus der besagten Drucklufterzeugungszentrale kontrollieren, wobei die besagte erwärmte Druckluft durch einen Luftauslass austritt.

2. Anlage (10) zur Temperaturkontrolle der aus einer Drucklufterzeugungszentrale austretenden Druckluft für die Durchführung des Verfahrens gemäß Anspruch 1, **dadurch gekennzeichnet, dass** sie einen Einlass (10.1) für Druckluft umfasst, die durch Kompressormittel erzeugt wird und über erste Filtermittel (A) mit einem Luft-Kühlmittel-Austauscher (B) verbunden ist, wo die Druckluft mit einem Kühlgas in Kontakt kommt, das die Ausfällung des Kondenswassers und die Verringerung der Temperatur der Druckluft selbst bewirkt, bis zu einer vorbestimmten Temperatur, die der Tautemperatur entspricht, **dadurch gekennzeichnet, dass** besagter Austauscher (B) stromabwärts in Bezug auf Kondenswasser-Abscheidemittel (D) pneumatisch verbunden ist, die pneumatisch mit koaleszierenden Filtermittel (G) verbunden sind, die die schwebenden Ölpartikel vom durchströmenden Luftstrom abscheiden und die ihrerseits in Bezug auf eine Heizkammer (N) pneumatisch verbunden sind, die mit Mitteln zur Erwärmung der durchströmenden Luft ausgestattet ist, wobei die Anlage **dadurch gekennzeichnet ist, dass** die Mittel zur Erwärmung der Luft konfiguriert sind, um die Temperatur der in der besagten Kammer (N) durchströmenden Druckluft auf einen vorher festgelegten Wert zu erhöhen, der kontinuierlich durch elektronische Mittel mit Temperaturfühler (O) kontrolliert wird, die die Temperaturkontrolle kontinuierlich durchführen und mit den besagten Mitteln zum Erwärmung der besagten Kammer (N) kontinuierlich in Abhängigkeit auch von der Menge von Druckluft aus der besagten Drucklufterzeugungszentrale zusammenwirken, wobei die erwärmte Druckluft durch einen Luftauslass (10.2) austritt.

3. Anlage gemäß Anspruch 2, in der Kompressormittel (C) für die Zufuhr von Kühlgas zu dem besagten Austauscher (B), und Ventilmittel (H) für den Bypass von Heißgasen, die in dem Fluidkreislauf zwischen dem besagten Austauscher (B) und besagten Kompressormitteln (C) angeordnet sind, vorgesehen sind.

4. Anlage gemäß Anspruch 2 und/oder 3, in der zwischen dem besagten Austauscher (B) und den besagten Kompressormitteln (C) ein Fluidkreislauf vorgesehen ist, in dem ein Kapillarrohr (E) den besagten Austauscher (B) mit Filter-Trockner-Mitteln (F) verbindet, die stromaufwärts von Kondensatormitteln (L) angeordnet sind, die Elektroventilator-Kondensatormittel (M) einschließen, von denen ein Druckluftstrom in einem kontinuierlichen Zyklus zu den Kompressormitteln (C) umgeleitet wird.

5. Anlage gemäß einem oder mehreren der Ansprüche von 2 bis 4, in der Ventilmittel zum Ablassen des Kondenswassers, manuelle bzw. automatische (P, Q), aus besagten Kondenswasser-Abscheidemitteln (D) und aus besagten koaleszierenden Filtermitteln (G) abgezweigt werden.

## Revendications

1. Procédé de régulation de la température de l'air comprimé sortant d'une unité de production d'air comprimé, où :
- air comprimé, produit par un compresseur (C), est transporté, à travers des premiers moyens à filtre (A), dans un échangeur air-réfrigérant (B), où l'air comprimé entre en contact avec un gaz de refroidissement qui provoque la précipitation du condensat et la réduction de la température de l'air comprimé, jusqu'à une température prédéterminée et substantiellement équivalente à celle de rosée, et
- l'air ainsi traité est véhiculé à travers des moyens à filtre coalescent (G), qui retiennent les particules d'huile, puis à travers une chambre de chauffe (N), équipée de moyens de chauffage de l'air, le procédé étant **caractérisé par le fait que** les moyens de chauffage de l'air augmentent la température de l'air comprimé passant dans ladite chambre (N) jusqu'à une valeur prédéterminée régulée en continu par des moyens électroniques à capteur de température (O), qui commandent en continu lesdits moyens de chauffage pour le débit d'air comprimé en sortie de ladite unité de production d'air comprimé, l'air comprimé chauffé sortant par une sortie d'air.

2. Installation (10) de régulation de la température de l'air comprimé à la sortie d'une unité de production d'air comprimé, pour la mise en œuvre du procédé selon la revendication 1, **caractérisée par le fait qu'**elle comprend une entrée (10.1) d'air comprimé, produit par des moyens à compresseur et reliée, par des premiers moyens à filtre (A), à un échangeur air-réfrigérant (B), où l'air comprimé entre en contact avec un gaz réfrigérant, qui provoque la précipitation du condensat et la réduction de la température de l'air comprimé, jusqu'à une température prédéterminée équivalente à celle de rosée, et **par le fait que** ledit échangeur (B) est raccordé pneumatiquement, en aval, par rapport aux moyens de séparation du condensat (D), qui sont raccordés pneumatiquement par rapport aux moyens à filtre coalescent (G), qui séparent les particules d'huile en suspension du flux d'air passant et qui sont, à leur tour, raccordés pneumatiquement par rapport à une chambre de chauffe (N), munie de moyens de chauffage de l'air passant, l'installation étant **caractérisée par le fait que** les moyens de chauffage de l'air sont configurés pour augmenter la température de l'air comprimé passant dans ladite chambre (N) jusqu'à une valeur prédéterminée régulée en continu par des moyens électroniques à capteur de température (O), qui effectuent en continu la régulation de la température et interagissent en continu avec lesdits moyens de chauffage de ladite chambre (N) en fonction également du débit d'air comprimé sortant de ladite unité de production d'air comprimé, l'air comprimé chauffé sortant par une sortie d'air (10.2).

3. Installation selon la revendication 2, où sont prévus des moyens à compresseur (C) pour l'alimentation en gaz réfrigérant audit échangeur (B), et des moyens à vanne (H) de dérivation de gaz chaud disposés dans le circuit de fluide entre ledit échangeur (B) et lesdits moyens à compresseur (C) .

4. Installation selon la revendication 2 et/ou 3, où est prévu entre ledit échangeur (B) et ledit moyen à compresseur (C) un circuit de fluide, dans lequel un tube capillaire (E) relie ledit échangeur (B) à des moyens avec filtre déshydratant (F) disposés en amont de moyens à condenseur (L), comprenant des moyens à ventilateur électrique-condenseur (M), à partir desquels un flux d'air comprimé est redirigé, en cycle continu, vers lesdits moyens à compresseur (C).

5. Installation selon une ou plusieurs des revendications de 2 à 4, dans laquelle des moyens à vanne de décharge de condensats, respectivement manuels et automatique (P, Q), sont ramifiés en sortie desdits moyens séparateurs de condensat (D) et desdits moyens à filtre coalescent (G).
